(19) Europäisches Patentamt
European Patent Office
Office européen des brevets

(11) **EP 3 294 449 B1**

(12) **EUROPÄISCHE PATENTSCHRIFT**

(45) Veröffentlichungstag und Bekanntmachung des Hinweises auf die Patenterteilung:
**09.09.2020   Patentblatt 2020/37**

(21) Anmeldenummer: **16726029.8**

(22) Anmeldetag: **13.05.2016**

(51) Int Cl.:
*B01J 21/08* (2006.01)   *B01J 23/28* (2006.01)
*B01J 23/882* (2006.01)   *B01J 23/883* (2006.01)
*B01J 35/10* (2006.01)   *B01J 37/04* (2006.01)
*B01J 37/02* (2006.01)   *B01J 37/08* (2006.01)
*B01J 37/20* (2006.01)   *B01D 53/86* (2006.01)
*B01J 37/03* (2006.01)   *B01J 21/06* (2006.01)
*B01J 35/02* (2006.01)

(86) Internationale Anmeldenummer:
**PCT/EP2016/060840**

(87) Internationale Veröffentlichungsnummer:
**WO 2016/184805 (24.11.2016 Gazette 2016/47)**

(54) **PULVERFÖRMIGES TITANOXID, VERFAHREN ZU DESSEN HERSTELLUNG UND DESSEN VERWENDUNG**

PULVERULENT TITANIUM OXIDE, METHOD FOR THE PREPARATION THEREOF AND USE THEREOF

OXYDE DE TITANIUM POUDREUX, PROCÉDÉ DE SA PRÉPARATION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2015   DE 102015107664**

(43) Veröffentlichungstag der Anmeldung:
**21.03.2018   Patentblatt 2018/12**

(73) Patentinhaber: **Venator Germany GmbH**
**47198 Duisburg (DE)**

(72) Erfinder:
• **GROTHE, Sonja**
  **46147 Oberhausen (DE)**
• **THIEDE, Tobias**
  **44625 Herne (DE)**

(74) Vertreter: **Nobbe, Matthias**
**Demski & Nobbe**
**Patentanwälte**
**Mülheimer Strasse 210**
**47057 Duisburg (DE)**

(56) Entgegenhaltungen:
**EP-A1- 1 422 198**          **EP-A1- 1 712 520**
**DE-A1-102011 051 334**   **US-B1- 6 956 006**

**EP 3 294 449 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft pulverförmiges anorganisch nachbehandeltes Titanoxid, Verfahren zu dessen Herstellung sowie dessen Verwendung zur Herstellung von Katalysatoren, insbesondere für die Anwendung als Photokatalysator und als Träger für Raffinerie-Katalysatoren.

Im Stand der Technik ist eine Reihe von Titandioxiden und auch von $TiO_2$-$SiO_2$-Materialien bekannt, die als Katalysator und/oder Träger für katalytisch aktive Materialien verwendet werden.

Im Bereich der Photokatalyse wird eine Reihe von Photokatalysatoren auf $TiO_2$-Basis auf dem Markt angeboten. Dies sind in der Regel Anatase, Anatas-Rutil-Mischungen oder dotierte Titandioxide mit vielfältigen Anwendungsmöglichkeiten. Bei der Photokatalyse werden unter UV-Beleuchtung gasförmige oder gelöste Stoffe per Radikalreaktion oder Ladungsträgerübergang an Titandioxid, zumeist als Anatas, umgesetzt. Bekannterweise haben oberflächenreiche Titandioxide wie die kommerziell erhältlichen Produkte "HOMBIKAT UV100" oder "HOMBIKAT M211" gute photokatalytische Eigenschaften. Dennoch besteht der Wunsch, die photokatalytische Aktivität weiter zu erhöhen.

Die Verwendung von Titandioxid als Trägermaterial zur Herstellung von Hydrotreating-Katalysatoren für die Hydrodesulfurierung (HDS) und Hydrodenitrogenierung (HDN) ist seit langem bekannt. So beschreibt z.B. die US6419889B1 die Verwendung eines Titandioxid-Trägers mit einer spezifischen Oberfläche von 70 - 99 m²/g und einer bimodalen Porenverteilung, wobei 90 % der Poren Durchmesser von wenigstens 100 nm haben. Allerdings ist die thermische Stabilität von reinen Titandioxiden für Hydrotreating-Anwendungen, die typischerweise bei 400 °C stattfinden, nicht gut genug, was zur Alterungseffekte und dem Verlust an katalytischer Aktivität führt.

Bekanntermaßen können auch $TiO_2/SiO_2$-Materialien als Katalysator oder Katalysator-Träger für verschiedene katalytische Anwendungen, insbesondere als Träger für die selektive katalytische Reduktion zur Reduktion von Stickoxiden in Abgasen von Feuerungsanlagen, Müllverbrennungsanlagen, Gasturbinen, Industrieanlagen und Verbrennungsmotoren, als V-SCR Katalysatoren genutzt werden. Dabei wird $SiO_2$ typischerweise zur Erhöhung der thermischen Stabilität eingebracht. Durch die Zugabe von $SiO_2$ wird ein Teil der katalytisch aktiven Titandioxid-Oberfläche mit $SiO_2$ belegt, wodurch allerdings die katalytischen Eigenschaften verschlechtert werden.

Zur Herstellung derartiger $TiO_2/SiO_2$-Materialien ist eine Reihe von Verfahren bekannt. Einige Methoden zur Herstellung von solchen $TiO_2/SiO_2$-Materialien basieren auf der Fällung aus Ti-haltigen Lösungen (Ti-Alkoholaten, Titanylsulfat, Titanoxichlorid etc.) mit Basen, mit oder ohne Zugabe von Si-haltigen Lösungen.

So ist in der EP668100A1 ein Verfahren zur Herstellung eines $TiO_2/SiO_2$-Katalysators durch Zugabe einer sauren Lösung, die eine Siliziumverbindung und eine Titanverbindung darin gelöst enthält, zur Lösung einer basischen Verbindung, um eine Co-Fällung herbeizuführen, beschrieben.

In der DE3619337A1 ist die Herstellung eines $TiO_2/SiO_2$-Pulvers durch Mischung einer wässrigen Titansulfat-Lösung mit einem ammoniumhaltigen, wässrigen $SiO_2$-Sol beschrieben. Das Fällprodukt wird gewaschen, getrocknet und kalziniert und zur Herstellung eines Katalysatormaterials eingesetzt.

Zudem sind in der Literatur zahlreiche Sol-Gel-Verfahren zur Herstellung von nano-$TiO_2$ aus Titan-organischen Vorstufen beschrieben: beispielhaft ist hier die EP 1719737A1.

Sowohl die mittels Fällung hergestellten $SiO_2/TiO_2$-Materialien als auch die durch Sol-Gel-Verfahren hergestellten $TiO_2/SiO_2$-Materialien sind nahezu amorph, d.h. mittels Röntgendiffraktometrie sind keine oder nur sehr schwache Signale detektierbar. Diese amorphen $TiO_2/SiO_2$-Materialien haben in der Regel sehr schlechte katalytische Eigenschaften. Zur Erzeugung von katalytisch aktiven $TiO_2/SiO_2$-Partikeln sind nach dem Stand der Technik thermische Behandlungen wie hydrothermale Behandlungen und/oder Kalzination erforderlich. Durch diese Schritte wird die Kristallinität erhöht, wohingegen die spezifische Oberfläche und der Hydroxylgruppen-Gehalt reduziert werden. Diese Abnahme ist für die katalytischen Anwendungen nachteilig.

Neben der oben beschriebenen Möglichkeit, Ti-haltige Lösungen und Si-haltige Lösungen zu mischen und dann zur Ausfällung zu bringen, sind im Stand der Technik auch Verfahren zur Auffällung von Si-Verbindungen auf partikuläres Titandioxid beschrieben.

So betrifft die US6956006 ein Verbundmaterial aus Silizium und Titandioxid, das eine verbesserte thermische und hydrothermale Beständigkeit der Porenstruktur aufweist. Das Verbundmaterial ist durch Fällung von Titanhydroxid aus einer wässrigen Lösung, die Sulfatsalze und Harnstoff enthält, gefolgt von einer hydrothermalen Behandlung in der Mutterlauge, und durch Umsetzung des Niederschlags mit einem basischen Kieselsol erhältlich.

Ferner beschreibt die WO0114054A1 ein Verfahren zur Herstellung von mesoporösem, pulverförmigem $TiO_2/SiO_2$-Material, bei dem zunächst Titandioxid in Form eines Titanhydroxides zur Ausfällung gebracht wird und danach die Zugabe einer $SiO_2$-Komponente erfolgt.

US 7125536B2 beschreibt ein Verfahren zur Herstellung von nanostrukturierten Partikeln mit hoher thermischer Stabilität mittels Fällung von Zirkon- oder Titansalzen mit einer Base, Zugabe eines Stabilisierungmittels z.B. fumed Silica, hydrothermaler Alterung, Waschung, Trocknung und Glühung.

Bei dem Verfahren gemäß US8545796B2 wird ein eine Titandioxid-Suspension mit einer Si-Quelle gemischt und dann der pH Wert auf < 8,5 eingestellt, so dass $SiO_2$ auf die $TiO_2$-Partikel ausfällt. Die so hergestellten Produkte weisen spezifische Oberflächen von < 400 m$^2$/g und Porenvolumina von < 0,4 cm$^3$/g auf. Die oben genannten Verfahren zur Auffällung von SiO$_2$ auf partikulärem Titandioxid führten dazu, dass durch die Zugabe von SiO$_2$ ein Teil der katalytisch aktiven Titandioxid-Oberfläche mit SiO$_2$ belegt wird. Dadurch werden die katalytischen Eigenschaften verschlechtert.

DE-A-10 2011 051 334 offenbart ein alkaliarmes Katalysatormaterial und Verfahren zu dessen Herstellung.

Im Stand der Technik sind keine Titandioxide bekannt, die eine hohe thermische Stabilität mit sehr hohen spezifischen Oberflächen, hohen Porenvolumina und ausgeprägter Kristallinität vereinigen und somit auch bei erhöhten Anwendungstemperaturen ausgezeichnete Eigenschaften als Katalysator oder Vorläufermaterial aufweisen.

Seitens der Erfinder wurde nun gefunden, dass das erfindungsgemäße anorganisch-nachbehandelte pulverförmige Titanoxid deutlich erhöhte katalytische Eigenschaften bei gleichzeitig hoher thermischer Stabilität besitzt und somit die Nachteile des Standes der Technik überwindet.

Das pulverförmige anorganisch nachbehandelte Titanoxid als erfindungsgemäßes Produkt zeichnet sich insbesondere durch folgende Eigenschaften aus:

- einen Gehalt von zusammen mindestens 90 Gew.-% hydratisiertes Titanoxid der allgemeinen Formel TiO$_{(2-x)}$(OH)$_{2x}$ mit 0 < x ≤ 1, besonders 0,1 < x ≤ 1, (berechnet als TiO$_2$) und Siliziumdioxid einschließlich hydratisierter Vorformen davon (berechnet als SiO$_2$), wobei das TiO$_2$/SiO$_2$-Gewichtsverhältnis, jeweils als TiO$_2$ und SiO$_2$ wie im Methodenteil beschrieben bestimmt, mindestens 3, bevorzugt mindestens 5, und weniger als 30, bevorzugt weniger als 25 beträgt und sich die Gew.-% auf das Gesamtgewicht des bei 105 °C für mindestens 2 Stunden getrockneten Katalysatormaterials beziehen; wobei der Rest auf 100 Gew.-% gebundenes Wasser und Spuren von Begleitelementen wie unten erläutert ist;
- die spezifische Oberfläche des getrockneten Produktes beträgt > 300 m$^2$/g, besonders bevorzug > 350 m$^2$/g;
- der Isoelektrische Punkt liegt im pH-Bereich von: 4,5-5,9, bevorzugt 4,7 - 5,9;

Das unmittelbare hergestellte pulverförmige anorganisch nachbehandelte Titanoxid als erfindungsgemäßes Produkt erfährt beim Trocknen des Materials bei 105 °C für mindestens 2 Stunden einen Gewichtsverlust von bis zu 10 Gew.-%, der hauptsächlich aus Wasser besteht. Neben dem dann im pulverförmigen anorganisch nachbehandelten und wie zuvor getrockneten Titanoxid noch gebundenen Wasser, das maximal 7 Gew.-% des bei 105°C getrockneten Produktes ausmachen kann und das erst bei höheren Temperaturen von etwa 200 bis 800 °C ausgetrieben werden kann, können Spuren von Begleitelementen wie Na, K, Ca, Mg, Cl, Sulfate, Nitrate, Nb, Zr, Fe, Cr, V, Li, Al von zusammen maximal 3 Gew.-% als Bestandteile im Produkt enthalten sein. Somit beträgt der Gesamtgehalt an TiO$_2$ plus SiO$_2$ im unmittelbar hergestellten pulverförmigen anorganisch nachbehandelten Titanoxid nach der Trocknung bei 105°C wie zuvor beschrieben mindestens 90 Gew.-%,. Unabhängig vom Trocknungsgrad beträgt das TiO$_2$/SiO$_2$-Gewichtsverhältnis in dem erfindungsgemäßen anorganisch nachbehandelten Titanoxid zwischen 3 und 30, was auch unabhängig von weiteren Komponenten ist.

Somit läßt sich das erfindungsgemäße anorganisch nachbehandelte Titanoxid auch beschreiben als ein pulverförmiges Katalysatormaterial enthaltend Titanoxid der allgemeinen Formel TiO$_{(2-x)}$(OH)$_{2x}$ mit 0 < x ≤ 1, besonders 0,1 < x ≤ 1 und Siliziumdioxid einschließlich hydratisierter Vorformen davon, mit einem TiO$_2$/SiO$_2$-Gewichtsverhältnis von mindestens 3, bevorzugt mindestens 5, und weniger als 30, bevorzugt weniger als 25, aufweisend eine spezifische Oberfläche von > 300 m$^2$/g und einen isoelektrischen Punkt im Bereich von 4,5 - 5,9, wobei der Gesamtgehalt an TiO$_2$ plus SiO$_2$ im unmittelbar hergestellten pulverförmigen anorganisch nachbehandelten Titanoxid mindestens 90 Gew.-% beträgt und der Rest auf 100 Gew.% gebundenes Wasser und Spuren von Begleitelementen wie oben erwähnt, die vom Produktionsprozeß und dem Ausgangsmaterial wie Ilmenit stammen.

Dabei kann das pulverförmige anorganisch nachbehandelte Titanoxid vorteilhaft zusätzlich zumindest eine der folgenden Eigenschaften aufweisen:

• eine durch Siebung klassifizierte Partikelgröße von höchstens 1mm;
• die spezifische Oberfläche des Produktes beträgt nach einer thermischen Behandlung von 1 h bei 500 °C unter Normalatmosphäre noch mind. 80 m$^2$/g, besonders mind. 100 m$^2$/g, bevorzugt mehr als 150 m$^2$/g;
• eine photokatalytische Aktivität, gemessen mit einer Degradationsrate für Chloroform-Abbau von mehr als 0,3 mmol/(h*m$^2$), besonders mehr als 0,5 mmol/(h*m$^2$), ganz besonders mehr als 0,6 mmol/(h*m$^2$) und besonders bevorzugt mehr als 0,7 mmol/(h*m$^2$), gemessen nach dem im Methodenteil beschriebenen Verfahren
• Porenvolumen (N$_2$-Desorption, total) > 0,3 cm$^3$/g, bevorzugt > 0,5 cm$^3$/g, besonders bevorzugt > 0,7 cm$^3$/g;
• eine Anatas-Phase mit Kristallitgrößen von 5 - 15 nm;
• eine Porenverteilung mit einem Maximum im Bereich von 10 - 35 nm, besonders im Bereich von 10 - 30, bevorzugt bei 20 - 30 nm.

Wenn erfindungsgemäß von Titanoxid oder einer Titanoxid-Suspension gesprochen wird, ist damit erfindungsgemäß eine Titan-Sauerstoff-Verbindung, die mit der Formel TiO$_{(2-x)}$(OH)$_{2x}$ (0<x≤1) und auch als ein Titandioxid-Hydrat, die auch als nebeneinander vorliegendes $TiO_2$ und $TiO(OH)_2$ bezeichnet werden kann, oder deren wässrige Suspension gemeint.

Oxide im Kontakt mit Elektrolyten entwickeln an der Oberfläche durch Dissoziationsvorgänge elektrische Ladungen, deren Grösse und Vorzeichen bei einem bestimmten pH-Wert charakteristisch für das betreffende Oxid ist. Der pH-Wert, bei dem die Oberfläche ungeladen ist, nennt man dabei isoelektrischen Punkt (IEP). Bei pH-Werten oberhalb des IEP ist die Oberfläche immer negativ, darunter ist sie positiv geladen. Der isoelektrische Punkt von reinem Titandioxid bzw. Titanoxidhydrat liegt bei ca. pH 6. Der isoelektrische Punkt von $SiO_2$ liegt bei pH = 2 bis 3. Dieser "Isoelektrische Punkt" (IEP) kann demnach als ein Maß für die Belegung der Oberfläche von Titandioxid-Partikeln mit $SiO_2$ dienen. Durch die Oberflächenbelegung der Titandioxid/Titanoxidhydrat-Oberfläche mit $SiO_2$ verschiebt sich der isoelektrische Punkt, abhängig von der prozentualen Belegung der Titandioxid-Oberfläche mit $SiO_2$, in den Bereich von pH 5 bis 2. Bei einer 100%-igen Belegung der Titandioxid-Oberfläche mit $SiO_2$ liegt der IEP vom $SiO_2/TiO_2$ bei pH = 3 bis 2. Je weniger der IEP durch die Behandlung der Titandioxid-Oberflächen mit $SiO_2$ in Richtung pH = 2 verschoben wird, desto geringer ist der Anteil der Oberflächenabdeckung mit $SiO_2$. Umgekehrt erhöht sich somit der Anteil der Partikel-Oberfläche aus Titandioxid, was wiederum zu einer Erhöhung der katalytischen Aktivität führt. Die prozentuale Belegung der Titandioxid-Oberfläche mit $SiO_2$ ist dabei vom $SiO_2$-Gehalt, aber auch vom Verfahren zur Si-Behandlung abhängig. Somit bestimmen nicht nur die strukturellen Eigenschaften (5-Punkt-BET, Porenvolumen) und der absolute $SiO_2$-Gehalt, sondern auch die Art und Weise der $SiO_2$-Verteilung auf der $TiO_2$-Oberfläche die katalytische Performance.

Diese Erkenntnisse haben die Erfinder hier bei der Entwicklung des erfindungsgemäßen Verfahrens und des danach hergestellten pulverförmigen anorganisch nachbehandelten Titanoxids berücksichtigt. Seitens der Erfinder wird somit ein solches pulverförmiges anorganisch nachbehandeltes Titanoxid mit definierten kristallinen Bereichen überwiegend mit Anatas-Modifikation bereitgestellt, bei dem ein Teil der Oberfläche mit $SiO_2$ oder hydratisierten Vorstufen oder Mischungen davon, insgesamt als Si-haltige Verbindung bezeichnet, belegt ist und so dem Material nach der Trocknung eine erhöhte thermische Stabilität bei nahezu unveränderter katalytischer Aktivität verliehen werden kann. Nach Erkenntnissen der Erfinder sind diese Eigenschaften dadurch erhältlich, dass durch auf den einzelnen Titanoxid-Teilchen mit allgemeinen Formel $TiO_{(2-x)}(OH)_{2x}$ mit $0 < x \leq 1$ abgeschiedenes $SiO_2$ und hydratisierter Vorformen davon die einzelnen $TiO_2$-Teilchen beim Trocknen auf "Abstand" gehalten werden, so dass die einzelnen kristallinen $TiO_2$-Bereiche nicht weiter zusammenwachsen können und somit ausreichend katalytisch aktive Oberfläche zur Verfügung gestellt wird.

Erfindungsgemäß wird das pulverförmige anorganisch nachbehandelte Titanoxid somit dadurch erhalten, dass eine Suspension von Titanoxid-Partikeln mit der Formel $TiO_{(2-x)}(OH)_{2x}$ $(0<x\leq1)$ mit der oder den Si-haltigen Verbindungen in Suspension behandelt wird und hierdurch die Oberfläche der genannten Titanoxid-Partikel teilweise damit belegt wird.

Das erfindungsgemäße Verfahren ist somit ein Verfahren zur Herstellung von pulverförmigem Katalysatormaterial auf Titanoxid-Basis, bei dem:

- eine wässrige Suspension von Titanoxidhydrat-Partikeln der allgemeinen Formel $TiO_{(2-x)}(OH)_{2x}$ mit $0 < x \leq 1$, besonders $0,1 < x \leq 1$, nachfolgend "Titanoxid-Suspension" genannt, mit mittleren Partikelgrößen von 20 - 500 nm, unter intensiver Rührung und/oder Dispergierung mit einer Lösung einer Si-haltigen Verbindung bevorzugt unter pH-Haltung bei pH-Werten von pH = 3-9, insbesondere 4 bis 7 vermischt wird,
- optional der pH-Wert, falls erforderlich, auf den Bereich zwischen 4 und 7 nachgestellt wird,
- die erhaltene Suspension abfiltriert wird,
- der erhaltene Filterkuchen optional mit Wasser gewaschen wird, bis das Filtrat eine Leitfähigkeit von höchstens 500 $\mu$S/cm aufweist, und
- das erhaltene Produkt getrocknet wird.

Der pH-Wert der Titanoxid-Suspension kann vor Zugabe der Si-haltigen Lösung auf pH-Werte von 3,0 bis 9,0, besonders 4,0 bis 8,5, bevorzugt auf 4,0 bis 7,5, besonders bevorzugt auf 4,0 bis 7,0, durch Zugabe von Säure oder Lauge eingestellt werden. Während der Zugabe der Si-haltigen Lösung kann der pH-Wert auf dem zuvor eingestellten pH-Wert gehalten werden.

Dabei werden die Mengen an Titanoxid-haltiger Suspension und der Lösung der Si-haltigen Verbindung so gewählt, dass das erfindungsgemäße Produkt nach einer Trocknung bei 105 °C für mind. 2 Stunden, wie oben beschrieben, einen Gesamtgehalt an $TiO_2$ plus $SiO_2$ von mindestens 90 Gew.% aufweist.

Die Suspension von Titanoxid-Partikeln mit der Formel $TiO_{(2-x)}(OH)_{2x}$ $(0< x \leq1)$ kann in einer Ausführungsform Metatitansäure der Formel $TiO(OH)_2$, sein, die bei dem zur Herstellung von Titandioxid angewendeten Sulfatverfahren als Zwischenprodukt anfällt.

In anderen Herstellungsverfahren kann die Suspension von Titanoxid-Partikeln mit der Formel $TiO_{(2-x)}(OH)_{2x}$ $(0<x\leq1)$ auch mittels Fällung, Hydrolyse oder Sol-Gel-Prozessen aus Ti-haltigen Lösungen, insbesondere aus hydrolysierbaren Verbindungen wie $TiOSO_4$- oder $TiOCl_2$-haltigen Lösungen, erhalten werden, wobei allerdings die Herstellung der Titanoxid-Partikel mit der Formel $TiO_{(2-x)}(OH)_{2x}$ $(0< x \leq1 )$ mittels des Sulfatverfahrens bevorzugt ist.

Diese verwendete "Titanoxid-Suspension", die diese Suspension von Titanoxidhydrat- und/oder hydratisierten Titanoxid-Partikeln der allgemeinen Formel $TiO_{(2-x)}(OH)_{2x}$ mit $0 < x \leq 1$, besonders $0{,}1 < x \leq 1$, oder Mischungen davon darstellt, hat bevorzugt folgende Eigenschaften:

- einen Ti -Gehalt berechnet als Titandioxid von 50 - 400 g $TiO_2$/l,
- eine mittlere Partikelgröße von 20 nm - 1000 nm, bevorzugt 20 nm - 500 nm, besonders bevorzugt 50 nm - 200 nm, ganz besonders bevorzugt 50-150 nm,
- eine spezifische Oberfläche der Partikel von 200 - 500 $m^2$/g, bevorzugt 200 - 400 $m^2$/g, besonders bevorzugt 300 - 400 $m^2$/g (gemessen nach Trocknung bei 105 °C für mindestens 120 min, mittels $N_2$-Porosimetrie, 5-Punkt BET)
- ein totales Porenvolumen der Partikel von > 0,3 $cm^3$/g, bevorzugt > 0,5 $cm^3$/g, besonders bevorzugt > 0,7 $cm^3$/g (gemessen nach Trocknung bei 105 °C für mindestens 120 min, mittels $N_2$-Porosimetrie, 5-Punkt BET)
- die kristallinen Phasen der Partikel liegen nach der Trocknung bei 105 °C für mindestens 120 min überwiegend in der Anatas-Phase vor, d.h. nach Abzug eines linearen Untergrunds beträgt das Verhältnis der Höhe des intensivsten Reflexes der Anatasstruktur (Reflex (101)) zur Höhe des intensivsten Reflexes der Rutil-Struktur (Reflex (110)) mindestens 5:1, bevorzugt mindestens 10:1. Bevorzugt liefert eine XRD-Analyse, durchgeführt gemäß der Beschreibung im Textteil "Methoden", ausschließlich Reflexe einer Anatasstruktur.

Die eingesetzte Metatitansäure enthält Titan-Sauerstoff-Verbindungen und kann freie sowie gebundene Schwefelsäure enthalten, wobei die kristallinen Anteile der enthaltenen Titan-Sauerstoff-Verbindungen wie zuvor erwähnt in Anatas-Modifikation vorliegen und eine typische Kristallitgröße von ca. 5-15 nm besitzen. Die Titan-Sauerstoff-Verbindungen lassen sich durch die allgemeine Formel $TiO_{(2-x)}(OH)_{2x}$, wobei ($0 < x \leq 1$) ist, beschreiben. Die Metatitansäure fällt bei der Herstellung von $TiO_2$ nach dem Sulfatverfahren als Zwischenprodukt an. Beim Sulfatverfahren wird Ilmenit und/oder Schlacke mit 90%-iger $H_2SO_4$ aufgeschlossen, der entstandene Aufschlusskuchen in Wasser gelöst und die Lösung geklärt. Durch Zugabe von Eisenschrott wird gelöstes dreiwertiges Eisen in die zweiwertige Form überführt, da $Fe^{3+}$ in nachteiliger Weise als $Fe(OH)_3$ zusammen mit der Metatitansäure ausfallen und an dieser adsorbiert werden würde. Je nach Fe-Gehalt der Lösung fällt nach dem Erkalten der Lösung $FeSO_4 \times 7 H_2O$ aus, das aus dem System entfernt wird. Bei der anschließenden Hydrolyse wird das $TiOSO_4$ in Metatitansäure überführt. Andere Hydratformen wie Orthotitansäure gehen unter Abspaltung von $H_2O$ in Metatitansäure über.

Die Neutralisation der (schwefelsauren) Metatitansäure kann erfindungsgemäß besonders mit einer Lauge, vorzugsweise ausgewählt aus NaOH, Ammoniak, Calciumcarbonat, Calciumhydroxid oder auch $Ba(OH)_2$, besonders bevorzugt mit NaOH, erfolgen.

Bevorzugt wird die erhaltene neutralisierte Metatitansäure mit Wasser auf eine Leitfähigkeit von höchstens 500 $\mu$S/cm im Filtrat gewaschen, gefolgt von einer Anschlämmung oder einem Aufdispergieren des gewaschenen Filterkuchens, vorzugsweise mit einem Rührer, besonders vorzugsweise mit einem Dissolver.

Die intensive Rührung oder Dispergierung der "Titanoxid-Suspension" wird bevorzugt mittels Turbinenrührer, Dissolver, Torusmill, Mahlpumpe, Fällpumpe, Batch-Perlmühle oder Rotor-Stator-Dispergiergerät (z.B. ULTRA-TURRAX der Fa. IKA) durchgeführt.

Die Angaben zu Gew.-% in dieser Beschreibung beziehen sich erfindungsgemäß auf das Gesamtgewicht des erfindungsgemäßen pulverförmigen anorganisch nachbehandelten Titanoxids nach dem Trocknen bei 105°C für mindestens 120 Minuten und addieren sich auf 100 Gew.-% des Gesamtgewichts des Materials, wobei die optionalen Komponenten umfasst sind.

Die Titanoxid-Partikel des erfindungsgemäßen Materials haben eine unregelmäßige Form, die näherungsweise als sphärisch beschrieben werden kann. Es handelt sich nicht um röhrchen-, stäbchen- oder plättchenförmige Materialien.

Als Si-haltige Verbindung kann besonders eine $Na_2SiO_3$-Lösung mit einer $SiO_2$-Konzentration von 50- 500 g $SiO_2$/l, besonders 100 - 500 g $SiO_2$/l, bevorzugt 200 - 400 g $SiO_2$/l, verwendet werden. Die Zugabe der Si-haltigen Verbindung wird bevorzugt wie folgt durchgeführt: Eine Si-haltige Lösung, z.B. in Form von $Na_2SiO_3$-Lösungen mit Konzentrationen von $SiO_2$ = 50 - 500 g $SiO_2$/l, wird zu der Titanoxid-Suspension mit der Formel $TiO_{(2-x)}(OH)_{2x}$ ($0 < x \leq 1$) während der Dispergierung bei einem pH-Wert von 3 - 9, bevorzugt pH 4 - 8,5, besonders 4 bis 7,5, besonders bevorzugt bei pH = 4 - 7, ganz besonders 4,5 bis 7 bis zum Erreichen eines $TiO_2$/$SiO_2$-Gewichtsverhältnis von mindestens 3 und weniger als 30 zugegeben.

Die so erhaltenen erfindungsgemäßen pulverförmigen Titanoxid-$SiO_2$-Katalysatormaterialien können erfindungsgemäß zur Herstellung von erfindungsgemäßen Formkörpern unter Verwendung des folgenden Verfahrens verwendet werden:

1. Herstellung einer wässrigen Titanoxid-Si02-Paste aus:

- erfindungsgemäßem pulverförmigen Titanoxid-$SiO_2$-Katalysatormaterial belegt mit Extrusionshilfsmittel(n),
- Peptisierungsmittel, bevorzugt Salzsäure, Schwefelsäure, Salpetersäure, Essigsäure, Oxalsäure.

- Wasser, bevorzugt entsalzes Wasser, sowie als optionale Bestandteile

  i. Plastifizierer wie z.B. Cellulose, Clay, Polyvinylalkohole, Polyethylenglycol, bevorzugt Cellulose, besonders bevorzugt Tylose

  ii. Bindemittel wie $TiO_2$-Sole, TiOS04-Lösung, Alumina, $SiO_2$-Sole oder Clays, bevorzugt $TiO_2$-Sol, TiOS04-Lösung oder AlO(OH) (Boehmit oder Pseudoboehmit)

  iii. Basen bevorzugt Ammoniak oder aminhaltige Verbindungen

  iv. Schmiermittel wie z.B. Glycerin

  v. Porenbildern wie z.B. Stärke oder Ruß (carbon black)

  Dabei wird der Wassergehalt der Paste bevorzugt so gewählt, dass die Paste mittels eines Extruders (Doppelschnecke) mit Drücken von 1 bis 100 bar, oder, falls erforderlich, bis zu 200 bar durch eine 1 - 5 mm durchmessende Düse gedrückt werden kann;

  2. Knetung der erhaltenen Paste, z.B. in einem Doppel-Z-Kneter, für typischerweise 30 - 60 min;
  3. Formgebung, z.B. Extrusion, der Paste zur Herstellung von Formkörpern wie Strängen z.B. mit 1 -5 mm Durchmesser und einer Länge von typischerweise 10 - 25 mm;
  4. Trocknen der Formkörper wie Extrudate zuerst bei 20 bis 30°C, besonders bei 25 °C, für einen Zeitraum von mehr als 1, besonders mehr als 6, ganz besonders mehr als 12 Stunden, anschließend bei 80 - 120 °C, bevorzugt bei 90 °C, für 60 bis 120 min und anschließend Calcinieren bei 300 bis 600°C, besonders bei 350 bis 600 °C, besonders bevorzugt bei 350° bis 450°C, insbesondere bei 400 °C für 1-4 Stunden.

Als Formgebungshilfsmittel können ein oder mehrere Verbindungen zur Belegung der Oberfläche der $TiO_2$-$SiO_2$-Partikel verwendet werden, die bei Temperaturen von unterhalb der Umwandlungstemperatur von Anatas in Rutil (915 °C), bevorzugt bis unterhalb 600°C, besonders bevorzugt bis unterhalb von 400°C, bevorzugt möglichst rückstandfrei, verdampfen, sublimieren oder sich zersetzen. Das Extrusionshilfsmittel unterstützt die Formgebung und kann zwischen und/oder auf den Teilchen des pulverförmigen Katalysatormaterials verbleiben und in einer Knetung unterstützend wirken, sowie dazu beitragen, die Teilchen des pulverförmigen Katalysatormaterials vorzugsweise zu vereinzeln. Als Extrusionshilfsmittel können somit Substanzen zugesetzt werden, die in erster Linie die Bildung einer plastischen Masse während der Knetung und darüber hinaus die mechanische Stabilität des Formkörpers beim Verformen begünstigen. Diese Extrusionshilfsmittel werden beim Calcinieren des Formkörpers entfernt, wobei eine vollständige Entfernung bevorzugt ist.

Bei dem Extrusionshilfsmittel kann es sich vorzugsweise um eine organische Kohlenwasserstoffverbindung handeln, die mindestens eine funktionelle Gruppe, ausgewählt aus Hydroxy, Carboxy, Amino, Imino, Amido, Ester, Sulfonyl, Keto, und deren Thioanaloga, oder mehrere verschiedene davon, enthalten kann und die bei Temperaturen unterhalb der Umwandlungstemperatur von Anatas in Rutil (915°C), bevorzugt bis unterhalb 600°C, besonders bevorzugt bis unterhalb von 400°C, beispielsweise bei der Herstellung des erfindungsgemäßen Titandioxid-Formkörpers, verdampft, sich zersetzt oder sublimiert. Bevorzugt ist eine niedermolekulare organische Kohlenwasserstoffverbindung mit mindestens einer funktionellen Gruppe, die ein oder mehrere Sauerstoffatome enthält, wie beispielsweise Hydroxy, Carboxy. Unter einer niedermolekularen organischen Kohlenwasserstoffverbindung wird dabei erfindungsgemäß eine Kohlenwasserstoffverbindung mit ein bis zwölf Kohlenstoffatomen verstanden die mindestens eine der Substituentengruppen, ausgewählt aus Hydroxy, Carboxy, Amino, Imino, Amido, Imido, Ester, Sulfonyl, Keto, und deren Thioanaloga, besonders Hydroxy, Carboxy, aufweist.

So kann das Extrusionshilfsmittel eine Säure, eine Base, ein Alkanolamin oder eine andere Substanz sein, die bei Calcinierung des erfindungsgemäßen Titandioxid-Formkörpers bei Temperaturen unterhalb der Umwandlungstemperatur von Anatas in Rutil (915 °C), bevorzugt bis unterhalb 600 °C, besonders bevorzugt unterhalb von 400 °C verdampft, sich zersetzt oder sublimiert.

Das Extrusionshilfsmittel ist bevorzugt eine organische Säure, besonders bevorzugt eine Carbonsäure, insbesondere mit ein bis sechs Kohlenstoffatomen, einschließlich einer Di- und Tricarbonsäure, besonders bevorzugt Essigsäure, Oxalsäure, Weinsäure, Maleinsäure, oder Zitronensäure, insbesondere Oxalsäure. Als Extrusionshilfsmittel kann bevorzugt auch Salpetersäure, Ammoniak, Alkanolamin oder eine Ammoniak-freisetzende Verbindung verwendet werden. Ebenso können als Extrusionshilfsmittel Kohlenhydrate wie Cellulose, Celluloseether, Tylose, Glukose, Polyacrylamine, Polyvinylalkohol, Stearinsäure, Polyethylenglykol oder Mischungen davon verwendet werden. Nach dem Verdampfen, Sublimieren oder Zersetzen des Extrusionshilfsmittels hat der erfindungsgemäße Formkörper einen Restkohlenstoffgehalt von weniger als 2 Gew.-%, bevorzugt weniger als 1 Gew.-%, bezogen auf das Gewicht des Formkörpers nach dem Calcinieren.

Die aus den erfindungsgemäßen Katalysatormaterialien hergestellten Formkörper haben üblicherweise die folgenden Eigenschaften:

- Crushing Strength von > 5 N/mm, besonders > 8 N/mm, vorzugsweise > 10 N/mm, besonders bevorzugt > 15 N/mm, ganz besonders bevorzugt >25 N/mm;
- Spez. Oberflächen von > 80 m$^2$/g, besonders > 100 m$^2$/g, vorzugsweise > 120 m$^2$/g, besonders vorzugsweise > 150 m$^2$/g, ganz besonders vorzugsweise > 200 m$^2$/g;
- N$_2$-Porenvolumina von > 0,2 cm$^3$/g, vorzugsweise > 0,3 cm$^3$/g, besonders vorzugsweise > 0,6 cm$^3$/g;
- eine spezifische Gesamtoberfläche pro Volumen von mehr als 100 000 m$^2$/l, bevorzugt mehr als 120 000 m$^2$/l.

Die aus den erfindungsgemäßen Katalysatormaterialien hergestellten erfindungsgemäßen Formkörper können erfindungsgemäß als Katalysator oder Katalysatorträger für katalytisch aktive Metalle wie V, W, Co, Mo, Ni, Fe, Cu, Cr, Ru, Pd, Pt, Ag, Zn für Anwendungen im Bereich der

- Photokatalyse
- Claus Katalyse
- Claus Tail Gas-Behandlung
- SCR-, Hydrotreating-, Gas-to-Liquid-, Fischer-Tropsch- Verfahren etc. eingesetzt werden.

Ein solcher erfindungsgemäßer beladener Titanoxid-haltiger Formkörper hat in der Regel einen Gehalt an 10 - 35 Gew.% Mo, 0 bis 6 Gew.% Co und/oder Ni, jeweils berechnet als Metalloxid (MoO$_3$, CoO und NiO), und einen Gehalt an Titanoxid der allgemeinen Formel TiO$_{(2-x)}$(OH)$_{2x}$ mit $0 < x \leq 1$, besonders $0,1 < x \leq 1$, und SiO$_2$, auf 100 Gew.-% und eine spezifische Oberfläche von mindestens 80 m$^2$/g, besonders mindestens 100 m$^2$/g und ein Porenvolumen von mehr als 0,25 cm$^3$/g bevorzugt mehr als 0,27 cm$^3$/g, wobei sich die Gew.-% auf das Gesamtgewicht der beladenen Titanoxid-haltigen Formkörper beziehen. Der MoO$_3$-Gehalt eines solchen erfindungsgemäßen beladenen Titanoxid-haltiger Formkörper kann besonders 18 - 30 Gew.-% betragen. Die Porengröße eines solchen erfindungsgemäßen beladenen Titanoxid-haltiger Formkörper kann im Mittel 7 bis 15 nm betragen.

Die vorliegende Erfindung wird durch den folgenden experimentellen Teil einschließlich der erfindungsgemäßen Herstellungsbeispiele und Vergleichsbeispiele weiter erläutert.

## Methoden

### Bestimmung der mittleren Partikelgröße

Zur Bestimmung der mittleren Partikelgröße von Titanoxid der allgemeinen Formel TiO$_{(2-x)}$(OH)$_{2x}$ mit $0 < x \leq 1$ wird die wässrige "Titanoxid-Suspension" zunächst in einer Lösung von 1 g Calgon/l deionisiertem Wasser verdünnt, so dass sich eine Konzentration von ca. 0,4 g TiO$_2$ auf 60 ml Lösung ergibt. Die so verdünnte "Titanoxid"-Suspension wird dann zunächst für 5 min im Ultraschallbad (z.B. Sonorex Super RK106, Firma Bandelin) und Rühren und dann für 5 min mit einem Ultraschallfinger (der Fa.Branson Sonifier W-450 mit Goldbooster zur Amplitudenverstärkung und 3/4 Zoll Hochleistungsresonator) dispergiert. Die Partikelgrößenverteilung wird mittels Photonenkorrelationsspektrometer mit Zetasizer Advanced- Software, z.B. Zetasizer 1000HSa, Fa. Malvern bestimmt. Es wird eine Messung mit multimodaler Berechnung bei einer Messtemperatur von 25 °C durchgeführt. Als mittlere Partikelgröße d$_{50}$ wird der d$_{50}$-Wert der Volumenverteilung, die unter Berücksichtigung der Dichte der Massenverteilung entspricht, angegeben.

### Bestimmung der Phase und Kristallitgröße nach Scherrer

Zur Bestimmung der Kristallmodifikation (Phasenidentifizierung) wird ein Röntgendiffraktogramm aufgenommen. Dazu werden die Intensitäten der nach der Bragg-Bedingung an den Netzebenen eines Kristalls gebeugten Röntgenstrahlen gegen den Beugungswinkel 2 Theta gemessen. Das Röntgendiffraktionsmuster ist typisch für eine Phase.

### Durchführung und Auswertung

Das zu untersuchenden Material wird mit Hilfe eines Objektträgers auf den Präparationsträger aufgestrichen. Die Auswertung der Pulverdiffraktometrie-Daten erfolgt mit Hilfe der JCPDS-Pulverdiffraktometrie-Datenbank. Die Phase ist identifiziert, wenn das gemessene Beugungsdiagramm dem abgespeicherten Strichmuster entspricht.
Die Messbedingungen sind typischerweise: 2 Theta = 10° - 70°, gemessen in Schritten von 2 Theta = 0,02°, Messzeit pro Schritt: 1,2 s.
Die Kristallitgröße wird nach der Scherrer-Methode aus der Halbwertsbreite des Anatas-Reflexes bei 2 Theta von 25,3° nach folgender Formel bestimmt:

$$D \text{ Kristallit} = K * I / (S * \cos(\text{Theta}))$$

wobei:

D Kristallit: Kristallitgröße [nm]
K: Shapekonstante = 0,9
Theta: Winkellage des Messreflexes 2 Theta/2
S: Halbwertsbreite des Messreflexes
I: Wellenlänge des verwendeten Röntgenstrahls.

Bestimmung von Silizium gerechnet als $SiO_2$

Einwiegen und Aufschluss des Materials mit Schwefelsäure/Ammonsulfat, gefolgt von Verdünnung mit dest. Wasser, Filtration und Waschen mit Schwefelsäure. Anschließend Veraschen des Filters und gravimetrische Bestimmung des $SiO_2$-Gehaltes.

Bestimmung von Titan gerechnet als $TiO_2$

Aufschluss des Materials mit Schwefelsäure/Ammonsulfat bzw. Kaliumdisulfat. Reduktion mit Al zu $Ti^{3+}$. Titration mit Ammoniumeisen-III-sulfat. (Indikator: $NH_4SCN$)

Berechnung des $TiO_2/SiO_2$ Verhältnisses

Die Konzentrationen von Ti und Si, berechnet als $TiO_2$ und $SiO_2$, in der Probe werden, wie zuvor angegeben, bestimmt. Anschließend wird das $TiO_2/SiO_2$ Verhältnis bestimmt, indem der ermittelte Gehalt an $TiO_2$ durch den ermittelten Gehalt an $SiO_2$ dividiert wird.

Bestimmung der spezifischen Oberfläche (Mehrpunkt-Methode) und Analyse der Porenstruktur nach dem Stickstoff - Gassorptionsverfahren ($N_2$ Porosimetrie)

Die spezifische Oberfläche und die Porenstruktur (Porenvolumen und Porendurchmesser) werden mittels $N_2$-Porosimetrie mit dem Gerät Autosorb 6 oder 6B der Firma Quantachrome GmbH durchgeführt. Die Bestimmung der BET Oberfläche (Brunnauer, Emmet und Teller) erfolgt nach DIN ISO 9277, die Messung der Porenverteilung nach der DIN 66134.

Probenvorbereitung ($N_2$ Porosimetrie)

Die in die Messzelle eingewogene Probe wird an der Ausheizstation für 16 h unter Vakuum vorgetrocknet. Anschließend erfolgt das Aufheizen unter Vakuum auf 180°C in ca. 30 Min. Die Temperatur wird anschließend eine Stunde unter Beibehaltung des Vakuums gehalten. Die Probe gilt als ausreichend entgast, wenn sich am Degasser ein Druck 20 - 30 Millitorr einstellt und nach Abkoppeln der Vakuumpumpe die Nadel der Vakuumanzeige ca. 2 Minuten lang stabil bleibt.

Messung / Auswertung ($N_2$ Porosimetrie)

Es wird die gesamte $N_2$-Isotherme mit 20 Adsorptionspunkten und 25 Desorptionspunkten vermessen. Die Auswertung der Messungen wurde wie folgt durchgeführt:

Spezifische Oberfläche (Mehrpunkt BET)
5 Messpunkte im Auswertebereich von 0,1 bis 0,3 p/p0
Auswertung Gesamt-Porenvolumen
Ermittlung des Porenvolumens nach der Gurvich-Regel
(Bestimmung über den letzten Adsorptionspunkt)

Die Bestimmung des Gesamt-Porenvolumens erfolgt gemäß DIN 66134 nach der Gurvich-Regel. Nach der s.g. Gurvich-Regel wird das Gesamt-Porenvolumen einer Probe aus dem letzten Druckpunkt bei der Adsorptionsmessung bestimmt:

p. Druck des Sorptivs

p0. Sättigungsdampfdruck des Sorptivs

Vp. spezifisches Porenvolumen nach der Gurvichregel (das Gesamtporenvolumen bei p/Po = 0,99) quasi letzter Adsorptionsdruckpunkt der bei der Messung erreicht wird.

Auswertung mittlerer Porendurchmesser (Hydraulischer Porendurchmesser) Zur Berechnung wird die Beziehung $4Vp/A_{BET}$ herangezogen, entspricht dem "Average Pore Diameter". $A_{BET}$ spezifische Oberfläche nach ISO 9277.

Methode zur Bestimmung der photokatalvtischen Aktivität

Die Bestimmung der Photoaktivität lässt sich durch den photokatalytischen Abbau von organischen Substanzen in der Gasphase bestimmen, wie z.B. Methanol oder Chloroform, und die Bestimmung der Photoaktivität wird beispielhaft in Schalen mit 90 mm Durchmesser durchgeführt. Von der Pulverprobe werden 50 mg mit 100 mg Bariumsulfat Blanc fixe XR-HN (kommerzielles Produkt der Sachtleben Chemie GmbH) im Becherglas in 40 ml VE-Wasser mit Ultraschall unter Rühren dispergiert und in einem Guss in die Petrischale überführt. Die Suspension wird bei 50°C unter Vakuum bis zur vollständigen Trockenheit eingedampft. Es muss nach der Trocknung eine gleichmäßig deckende Pulverschicht vorliegen. Die präparierte Pulverprobe wird 10 Stunden unter UV-Licht mit ca. 10W/m$^2$ konditioniert.

Zur Bestimmung der photokatalytischen Aktivität wird die Pulverprobe in den Gasreaktor einer Gasphotokatalyse-Einheit (z.B. von der Fa. Ansyco) mit UV-Lampe (E = 5 - 40 W/m$^2$) und angeschossenem Gaschromatograph (mit Split/Splitless- Injektor und FID- und PDD-Detektor, Steuereinheit und Verstärker z.B. "Trace GC Ultra") eingebaut. Vorab wurde die Belichtungsstärke auf 7 W/m$^2$ eingestellt und mittels UV-Messgerätes (z.B. PCE-UV34) überprüft. Nach Einbau der Probe wird ein Überdruck von 0,6 bar eingestellt und das System mit synthetischer Luft (50 % rel. Luftfeuchtigkeit) für 10 min gespült. Nach dem Spülvorgang wird ein Gasfluss von 100 l/h eingestellt, der leichte Überdruck auf 0 bar entspannt und 5 Minuten in dieser Einstellung stabilisiert. Danach wird über das beheizte Septum 1,0 µl Chloroform (entspricht 12,4 µmol) injiziert. Die Chromatogrammaufnahme erfolgt alle 7 Minuten. Vor Start der Belichtung wird abgewartet, bis sich das Prüfgas im Ad-/Desorptionsgleichgewicht befinden, d.h. bis bei vier aufeinanderfolgenden Messungen der Gehalt des Prüfgases maximal 0,2 µmol vom Mittelwert abweicht. Nach dieser Gleichgewichtseinstellung wird die Belichtung mit der UV-Lampe der Gasphotokatalyse-Einheit begonnen. Dann wird der Chloroform-Gehalt im Reaktor alle 7 min mittels GC-Messung gemessen. Vorab wurde das GC für Chloroform kalibriert.

Die spezifische photokatalytische Abbaurate in mmol/(h*m$^2$) wird über eine lineare Regression unter Nutzung der Daten für 0 und 7 min ermittelt. Die spezifische Abbaurate wie folgt berechnet:

$$spez\,.Abbaurate = \frac{\Delta\,n\,(\,Substanz\quad\,)}{\Delta\,t\,\cdot\,A\,(\,Probe\quad)}$$

Methode zur Bestimmung des Isoelektrischen Punktes

Als Isoelektrischen Punkt von Partikeln bezeichnet man den pH-Wert bei dem das Zetapotential Null ist. Hierbei ist das Zetapotential das elektrische Potential (auch als Coulomb-Potential bezeichnet) an der Abscherschicht eines bewegten Partikels in einer Suspension. Die elektrophoretische Beweglichkeit wird mit einem so genannten ESA Gerät ("PA Field ESA-Gerät" mit Titrationseinheit) gemessen. Dabei wird die Druckamplitude von Ultraschallwellen gemessen, die dadurch entstehen, dass elektrostatisch geladene Teilchen einem elektrischen Wechselfeld innerhalb einem Frequenzbereich etwa 0,8 - 1,2 MHz ausgesetzt werden.

Es gilt die Gleichung:

$$ESA = c\,\cdot\phi\,\cdot\Delta\rho\,\cdot\mu$$

wobei:

ESA = Electrokinetic Sonic Amplitude (Signal Druckamplitude)

c = Schallgeschwindigkeit in der Lösung

$\phi$ = Volumenbruch der Teilchen

$\Delta\rho$ = Dichtedifferenz zwischen Teilchen und Lösung

$\mu$ = elektrophoretische Beweglichkeit

Zur Probenvorbereitung wird das Pulver zunächst mit entsalztem Wasser in einer Flasche unter intensivem Schütteln vermischt (2 Vol-% Pulver). Mit Hilfe des PA Field ESA-Gerätes wird das ESA-Signal der suspendierten Partikeln als Funktion des pH-Wertes der Suspension gemessen. Dazu wird die Suspension mit Salzsäure (c(HCl) = 1 mol/l) und (c(NaOH) = 1 mol/l) titriert. Aus der elektrophoretischen Beweglichkeit lässt sich das Zetapotential berechnen. Für wässrige sowie lösungsmittelhaltige Systeme geschieht dies durch die "PA Field ESA Software". Die elektrophoretische Beweglichkeit wird als Funktion des pH-Wertes aufgetragen. Der Isoelektrische Punkt entspricht dem pH-Wert bei dem die elektrophoretische Beweglichkeit gleich Null ist.

Beispiele

Vergleichsbeispiel 1 (VB1):

Titandioxid in Anatas-Modifikation mit einer spezifischen Oberfläche von ca. 330 m$^2$/g, einem Porenvolumen von ca. 0,3 cm$^3$/g und einem Sulfat-Gehalt von ca. 1,5 Gew.%/$TiO_2$.

Vergleichsbeispiel 2 (VB2)

833 mL Metatitansäure (Firma Sachtleben Chemie GmbH) mit einem Titandioxidgehalt von 300 g $TiO_2$/l wurden in einem 2 l Becherglas vorgelegt. Unter Rührung wurden 67,6 mL Wasserglas (360 g $SiO_2$/L) mit einer Rate von 2,0 mL/min zudosiert. Danach wurde der pH-Wert mit 4,5/21 °C bestimmt. Die Suspension wurde 5 min nachgerührt und mit Natronlauge auf pH 6,5/24 °C neutralisiert, wobei bei pH = 5,0 400 ml TE-Wasser zugegeben wurden. Die Suspension wurde auf 60 °C erwärmt und unter Rühren bei dieser Temperatur für 1 Stunde gereift. Die Suspension wurde über eine Nutsche filtriert und gewaschen. Im letzten Waschfiltrat wurde eine Leitfähigkeit von 40 µS/cm gemessen. Der gewaschene Filterkuchen wurden in vier Stunden im Umluft-Trockenschrank bei einer Temperatur von 150 °C getrocknet und anschließend 10 s in der IKA-Labormühle gemahlen.

Vergleichsbeispiel 3 (VB3)

In einem 5 L Becherglas wurden 500 mL TE-Wasser vorgelegt und mit einem Dissolver, Dispermat LL30, und einer Dissolverscheibe von 6 cm Durchmesser gerührt. Zur Fällung wurden die Edukte 1,92 L Titanylsulfat-Lösung (HOMBITYL, c($TiO_2$) = 112 g/L), 108 mL Na-Silikat-Lösung (c($SiO_2$) = 200 g/L) und 2,47 L Ammoniak-Lösung (w(NH3) = 15 %) unter Rührung innerhalb von ca. 190 min in die Wasservorlage gegeben, dabei wurde der pH-Wert während der Fällung im Bereich pH = 5-6 gehalten. Die Fällung wurde mit einer Drehzahl von 700 min$^{-1}$ begonnen und mit steigendem Fällvolumen auf 1.000 min$^{-1}$ erhöht. Am Ende der Fällung wurde für die Fällsuspension ein pH-Wert von 5,4/gemessen bei 45°C bestimmt. Die Fällsuspension wurde unter Rühren auf 80 °C erhitzt und bei dieser Temperatur für 1 h gereift. Der pH-Wert der Fällsuspension wurde danach mit 4,8/80 °C bestimmt und mit verdünnter Schwefelsäure (20 %ig) auf pH 4,25/80 °C eingestellt. Die Suspension wurde über eine Nutsche filtriert und der Filterkuchen gewaschen. Nach der Waschung wurde eine Leitfähigkeit von 342 µS/cm im Filtrat bestimmt. Der gewaschene Filterkuchen wurde über Nacht bei 150 °C im Trockenschrank getrocknet und anschließend 10 s in der IKA-Labormühle gemahlen.

Erfindungsgemäßes Beispiel 1 (EB 1):

Eine "Titanoxid-Suspension" mit einer mittleren Partikelgröße von 50 nm und einem $TiO_2$ Gehalt von 50 g $TiO_2$/l wurden als Ausgangsmaterial verwendet. 6 l dieser "Titanoxid-Suspension" wurde mittels Dissolver für 15 min dispergiert. Der pH-Wert der Suspension wurde mit verdünnter Natronlauge auf pH = 6,5 eingestellt. Danach wurden 34 ml einer Na-Silikat Lösung mit (350 g $SiO_2$/l) unter Dissolverdispergierung und innerhalb von 15 min zur Titanoxid-Suspension gegeben. Die Suspension wurde unter intensiver Rührung für 60 min bei 60 °C gereift. Anschließend wurde die Suspension filtriert, gewaschen und sprühgetrocknet.

Erfindungsgemäßes Beispiel 2 (EB 2):

Eine "Titanoxid-Suspension" mit einer mittleren Partikelgröße von 50 nm und einem $TiO_2$ Gehalt von 50 g $TiO_2$/l wurden als Ausgangsmaterial verwendet. 6 l dieser "Titanoxid-Suspension" wurde in einer Torus-Mill (Fa. Getzman) für 30 min dispergiert. Der pH-Wert der Suspension wurde mit verdünnter Natronlauge auf pH = 7,5 eingestellt. Danach wurden 68 ml einer Na-Silikat Lösung (350 g $SiO_2$/l) unter Dispergierung und innerhalb von 30 min zur Titanoxid-Suspension gegeben. Die Suspension wurde unter intensiver Rührung für 60 min bei 60 °C gereift. Anschließend wurde die Suspension filtriert, gewaschen und sprühgetrocknet.

Erfindungsgemäßes Beispiel 3 (EB 3):

Eine "Titanoxid-Suspension" mit einer mittleren Partikelgröße von 50 nm und einem $TiO_2$ Gehalt von 50 g $TiO_2$/l wurden als Ausgangsmaterial verwendet. 6 l dieser "Titanoxid-Suspension" wurde in einem Rotor-Stator-Dispergier-Aggregat (ULTRA-TURRAX von IKA) für 15 min dispergiert. Der pH-Wert der Suspension wurde mit verdünnter Natronlauge auf pH = 7,5 eingestellt. Danach wurden 100 ml einer Na-Silikat Lösung (350 g $SiO_2$/l) unter Dispergierung und innerhalb von 20 min zur Titanoxid-Suspension gegeben. Die Suspension wurde unter intensiver Rührung für 60 min bei 60 °C gereift. Anschließend wurde die Suspension filtriert, gewaschen und sprühgetrocknet.

Erfindungsgemäßes Beispiel 4 (EB 4):

Eine "Titanoxid-Suspension" mit einer mittleren Partikelgröße von 50 nm und einem $TiO_2$ Gehalt von 100 g $TiO_2$/l wurden als Ausgangsmaterial verwendet. 1,5 l dieser "Titanoxid-Suspension" wurde mittels Dissolver für 15 min dispergiert. Der pH-Wert der Suspension wurde mit verdünnter Natronlauge auf pH = 6,0 eingestellt. Danach wurden 15,9 ml einer Na-Silikat Lösung mit (378 g $SiO_2$/l) unter Dissolverdispergierung und innerhalb von 15 min zur Titanoxid-Suspension gegeben. Die Suspension wurde unter intensiver Rührung für 30 min bei 60 °C gereift. Anschließend wurde die Suspension filtriert, gewaschen und sprühgetrocknet.

Erfindungsgemäßes Beispiel 5 (EB 5):

Eine "Titanoxid-Suspension" mit einer mittleren Partikelgröße von 50 nm und einem $TiO_2$ Gehalt von 100 g $TiO_2$/l wurden als Ausgangsmaterial verwendet. 1,5 l dieser "Titanoxid-Suspension" wurde mittels Dissolver für 15 min dispergiert. Der pH-Wert der Suspension wurde mit verdünnter Natronlauge auf pH = 6,0 eingestellt. Danach wurden 31,8 ml einer Na-Silikat Lösung mit (378 g $SiO_2$/l) unter Dissolverdispergierung und innerhalb von 15 min zur Titanoxid-Suspension gegeben. Die Suspension wurde unter intensiver Rührung für 30 min bei 60 °C gereift. Anschließend wurde die Suspension filtriert, gewaschen und sprühgetrocknet.

Die strukturellen Eigenschaften sowie die thermische Stabilität und die photokatalytische Aktivität der erfindungsgemäßen Pulver und der Vergleichsbeispiele sind in der Tabelle 1 aufgelistet.

Gemäß dem Stand der Technik sind $SiO_2$-stabilisierte Titandioxide bekannt, die nach thermischer Alterung (akzeptable) spezifische Oberflächen von ca. 200 $m^2$/g aufweisen (siehe z.B. Vergleichsbeispiel 2 und 3). Die photokatalytische Aktivität dieser Produkte ist allerdings auf sehr niedrigem Niveau (Choroformabbaurate von max. 0,1 mmol/h*$m^2$). Die schlechte photokatalytische Aktivität ist vermutlich durch eine Belegung der photokatalytisch aktiven Titandioxid-Oberfläche mit inaktivem $SiO_2$ verursacht und gleichzeitig mit vergleichsweise niedrigen IEPs (3,8 - 4,4) verbunden.

Reines Titandioxid wie z.B. das kommerziell erhältliche Produkt gemäß VB1 weist zwar annehmbare photokatalytische Abbauraten auf, allerdings sind diese Titandioxide nicht thermisch stabil. Die spez. Oberfläche dieser Produkte liegt nach 1 h bei 500 °C nur noch bei 80 - 100 $m^2$/g. Folglich können solche Materialien nicht als Katalysator oder Katalysator-Träger für Anwendungen bei erhöhten Temperaturen eingesetzt werden.

Lediglich die erfindungsgemäßen Materialien verbinden eine sehr hohe photokatalytische Aktivität (Choroformabbauraten von > 0,7 mmol/h*$m^2$) mit einer hohen thermischen Stabilität, d.h. spezifischen Oberflächen von größer gleich 130 $m^2$/g nach einer thermischen Behandlung von 1 h bei 500 °C.

Tab. 1: Pulvereigenschaften

| No. | Material | TiO2/SiO2-Verhältnis | IEP | BET [m2/g] | BET nach Alterung* [m2/g] | Porenvolumen [cm3/g] | Mittlerer Porendurchmesser [nm] | Photokatalytischer Choroform Abbau [mmol/h*m$^2$]: |
|---|---|---|---|---|---|---|---|---|
| VB1 | Titandioxid in Anatas-Modifikation | n.a. | 6 | 350 | 80 | 0.3 | 3.4 | 0,6 |
| VB2 | Titandioxid in Anatas-Modifikation, behandelt mit Na-Silicat-Lösung | 10 | 4.4 | 295 | 222 | 0.3 | 4.1 | <0,1 |
| VB3 | Coprecipitation aus TiOSO4, NH4OH, Na-Silicat-Lösung | 10 | 3.8 | 435 | 197 | 0.4 | 3.8 | 0,1 |
| EB1 | Titanoxidmit SiO$_2$ | 25 | 5.6 | 350 | ~ 160 | 0.8 | 9.1 | 2,0 |
| EB2 | Titanoxid mit SiO$_2$ | 12,5 | 5.3 | 350 | ~ 220 | 0.8 | 9.1 | 0,9 |
| EB3 | Titanoxid mit SiO$_2$ | 8,5 | 4.8 | 350 | ~ 240 | 0.8 | 9.1 | 0,8 |
| EB4 | Titanoxid mit SiO$_2$ | 25 | 5,7 | 304 | -195 | 0.75 | 9 | n.a. |
| EB5 | Titanoxid mit SiO$_2$ | 12,5 | 5,4 | 311 | -190 | 0,7 | 9 | n.a. |
| *Alterung für 1 h bei 500 °C | | | | | | | | |

Herstellung von Katalysatorträgern mittels Extrusion

Die in den obigen Beispielen und Vergleichsbeispielen hergestellten Materialien wurden zur Herstellung von Katalysatorträgern eingesetzt, wobei ein Extrusionsverfahren unter Verwendung eines Extrusionshilfsmittels angewendet wurde. Danach kann ein belegtes pulverförmiges Katalysatormaterial dadurch erhalten werden, dass eine Suspension von erfindungsgemäßen Partikeln mit dem Extrusionshilfsmittel oder Mischungen mehrerer Extrusionshilfsmittel in Lösung oder Suspension behandelt wird und hierdurch die Oberfläche der erfindungsgemäßen Partikel mit dem(n) Extrusionshilfsmittel(n) belegt wird und die belegten Partikel anschließend zu Formkörpern extrudiert werden.

VB1-E

400 g Hombikat M211 (Titandioxid, kommerzielles -Produkt der Fa. Sachtleben) und 64 g einer wässrigen 2,5 %-igen Tyloselösung werden in den Mischtrog des Doppel Z-Kneters eingebracht und ca. 1 min gemischt. Dann wird 60 g einer 10 Gew.-%igen Salzsäure und so lange entsalztes Wasser zugegeben bis die Knetmasse plastisches Verhalten aufweist. Diese Mischung wird dann für 30 Minuten geknetet. Anschließend wird 20 g Ammoniakwasser (25% ig) und 20 ml entsalztes Wasser zugegeben und für 30 min geknetet. Die Knetmasse wird dann mittels Extrusion, bei einem Druck von 40 - 70 bar, über eine 1,8 mm Matrize ("Quadrilobe" Form) ausgetragen und auf die gewünschte Länge (ca. 15 - 20 mm) geschnitten. Die so hergestellten Extrudate werden zunächst an Luft getrocknet und anschließend für 60 min auf 90 °C, dann über mehrere Stunden auf die Calcinierungstemperatur von 400°C aufgeheizt und für 120 min bei dieser Temperatur gehalten, und danach auf Raumtemperatur abgekühlt.

VB2-E

400 g Pulver aus Beispiel 2 und 64 g einer wässrigen 2,5 %-igen Tyloselösung werden in den Mischtrog des Doppel Z-Kneters eingebracht und ca. 1 min gemischt. Dann wird 60 g einer 10 Gew.-%igen Salzsäure und so lange entsalztes Wasser zugegeben bis die Knetmasse plastisches Verhalten aufweist (ca. 70 ml). Diese Mischung wird dann für 30 Minuten geknetet. Anschließend wird 20 g Ammoniakwasser (25% ig) und 20 ml entsalztes Wasser zugegeben und für 30 min geknetet. Die Knetmasse wird dann mittels Extrusion, bei einem Druck von 40 - 70 bar, über eine 1,8 mm Matrize ("Quadrilobe" Form) ausgetragen und auf die gewünschte Länge (ca. 15 - 20 mm) geschnitten. Die so gewonnenen Extrudate werden zunächst an Luft getrocknet und anschließend wie in Beispiel 1 getempert.

EB1-E

400 g des Pulvers aus EB1 und 64 g einer wässrigen 2,5 %-igen Tyloselösung werden in den Mischtrog des Doppel Z-Kneters eingebracht und ca. 1 min gemischt. Dann wird der pH-Wert der Knetmasse mittels Zugabe von Salzsäure auf pH = 1,5 eingestellt und so lange entsalztes Wasser zugegeben bis die Knetmasse plastisches Verhalten aufweist. Diese Mischung wird dann für 30 Minuten geknetet. Anschließend wird der pH-Wert der Knetmasse zur Zugabe von Ammoniakwasser (25% ig) auf pH = 5 eingestellt und für weitere 30 min geknetet. Die Knetmasse wird dann mittels Extrusion, bei einem Druck von 20 - 40 bar, über eine 1,8 mm Matrize ("Quadrilobe" Form) ausgetragen und auf die gewünschte Länge (ca. 15 - 20 mm) geschnitten. Die so hergestellten Extrudate werden zunächst an der Luft getrocknet und anschließend wie in Beispiel 1 getempert.

EB2-E und EB3-E

Die Herstellung der Extrudate aus den Pulvern aus EB2 und EB3 erfolgte analog zur o.g. Extrusion von Pulver EB1 (EB1-E).

Tabelle 2: Extrudat-Eigenschaften

| Beispiel | Spez. Oberfläche (5 Pkt-BET) [m²/g] | Porenvolumen (Total) [cm³/g] | Mittlerer Poren-durchmesser [nm] | Phase | scs [N/mm] | TBD [g/l] | Gesamtoberfläche pro Volumen [5 Pkt-BET x TBD] [m2/l] |
|---|---|---|---|---|---|---|---|
| VB1-E | 142 | 0.3 | 8 | Anatase | 30 | 675 | 95850 |
| VB2-E | n.b. | n.b. | n.b. | Anatase | n.b. | n.b. | |
| EB1-E | 215 | 0.59 | 11 | Anatase | 13 | 505 | 108575 |
| EB2-E | 255 | 0.55 | 9 | Anatase | 12 | 617 | 157335 |
| EB3-E | 260 | 0.58 | 9 | Anatase | 15 | 576 | 149760 |

14

Imprägnierung

Die in den Beispielen zur Extrusion hergestellten Extrudate wurden zur Imprägnierung mit aktiven Metallen wie NiMo- bzw. CoMo vorgesehen. Dazu wurden zunächst CoMo- bzw. NiMo-haltige Imprägnierlösungen wie folgt hergestellt:

Herstellung der CoMo- oder NiMo-Imprägnier-Lösungen

Die Imprägnierlösungen wurden in wässriger Lösung unter Verwendung entsprechender Metallverbindungen wie Salze oder Oxide in Gegenwart von Phosphorsäure hergestellt und mit Salpetersäure der pH Wert eingestellt.

Imprägnierung der Extrudate

Zur Imprägnierung wurden jeweils 100 g der Extrudate in ein rotierendes Gefäß (z.B. Rotationsverdampfer) gegeben. Die Imprägnierlösung wurde langsam (0,5 ml/min) zu den Extrudaten gegeben. Nach der Dosierung der Imprägnierlösung wurden die imprägnierten Extrudate für 24 h gealtert und anschließend erst bei 120 °C getrocknet und dann bei 350 °C geglüht. Nach dieser Glühung sind die Katalysatoren fertiggestellt. Die Sulfidierung der Mo-Spezies wird anschließend im Rahmen der so genannten Aktivierungsprozedur im Hydrotreating-Reaktor durchgeführt.

Untersuchung der Hydrotreating-Aktivität

Die katalytische Performance der Katalysatoren bzgl. der "Hydrodesulfurierung" (HDS) und der Hydrodenitrogenierung (HDN) wurde am Beispiel eines Vakuum-Gas-Öls (VGO) in einer 16-fach "Trickle-bed Reaktors" der Firma HTE getestet.

Probenvorbereitung

Die Katalysatoren wurden ohne vorherige Zerkleinerung als ganze Extrudate getestet. Dazu wurden Extrudate mit einer Länge von 2-4 mm ausgewählt und in Reaktoren mit inneren Durchmessern von 5 mm gefüllt. Nach dem Befüllen der Reaktoren mit den jeweiligen Katalysatormaterialien wurde Siliziumcarbid SiC (der Größe 125 - 160 $\mu$m) in einem Katalysator / SiC- Volumenverhältnis von 1 / 0,65 dazugegeben. Diese mit SiC-Partikeln verfüllte Katalysator-Schüttung wurde kompaktiert. Die Katalysatormenge wurde dabei so gewählt, dass nach der Kompaktierung ein Reaktorvolumen von jeweils 2 ml gefüllt war. Die eingefüllte Katalysatormasse berechnet sich aus der Stampfdichte (Tapped bulk density, TBD) der Katalysatoren (siehe Tab. 3). Insgesamt enthält der Reaktor drei Zonen, die obere und untere Zone werden ausschließlich mit SiC-Partikeln (125 - 160 $\mu$m) gefüllt, die mittlere Zone ist mit der oben beschriebenen Mischung aus SiC und Katalysator-Extrudaten gefüllt.

Rohstoffe

Als Rohstoff wurden ein "Vakuum-Gas-Öl" (VGO) (*Rohstoff für einen Mild Hydrocracker*) mit folgenden Eigenschaften verwendet:

Schwefelgehalt: 27075 mg S /kg
Stickstoffgehalt: 968 mg N / kg
Dichte bei 15°C: 0,9273 g/ml
Dichte bei 70°C: 0,8919 g/ml

Für die Aktivierung der Katalysatoren wurde ein LGO feed (Light Gas Oil) mit Dimethyldisulfid (DMDS) versetzt. Das resultierende LGO/DMDS-Gemisch hatte die folgenden Eigenschaften:

Schwefelgehalt: 24418 mg S /kg
Stickstoffgehalt: 116 mg N / kg
Dichte bei 15°C: 0,8589/ml

Aktivierungsprozedur

Vor der Untersuchung der mit Metall belegten Extrudate als Katalysatoren wurden diese in der oben beschriebenen Testeinheit aktiviert. Ziel der Aktivierung ist die Sulfidierung der vorliegenden Mo-Verbindungen zum katalytisch aktiven Molybdän-Sulfid. Dazu wurden die mit den Katalysatoren gefüllten Reaktoren in den Teststand eingebaut und mit der LGO/DMDS-Mischung beaufschlagt. Dabei wurde eine Druck von 60 bar und eine Raumgeschwindigkeit (Liquid hourly space velocity, LHSV) von 2 h$^{-1}$ verwendet. Das Gas-zu-Öl - Verhältnis (H$_2$ zur LGO/DMDS-Mischung) lag bei 200 Normliter / (h l). Zur Aktivierung wurde folgendes Temperaturprofil verwendet:

1. Benetzung mit LGO bei ca. 35 °C: 24 h
2. Temperaturerhöhung von 35 °C bis 150°C in Schritten von 25°C/h
3. Temperaturerhöhung von 150 °C bis 250°C in Schritten von 15°C/h
4. T = 250 °C für 14 Stunden bis zum stabilen H$_2$S Signal
5. Temperaturerhöhung von 250 °C bis 320°C in Schritten von 10°C/h
6. T = 320 °C für 11 Stunden bis zum stabilen H$_2$S Signal

Testbedingungen

Zur Untersuchung der Hydrotreating-Performance der Katalysatoren wurden die folgenden Testbedingungen gewählt:

1. Druck: p = 80 bar,
Gas-zu-Öl Verhältnis: H$_2$/VGO: 600 Nl(H$_2$)/h/l(VGO),
Raumgeschwindigkeit (Liquid hourly space velocity LHSV): 1,0 [1/h],
Temperatur: T = 370°C , 380 °C, 390 °C
2. Druck: p = 120 bar,
Gas-zu-Öl Verhältnis: H$_2$/feed: 600 Nl(H$_2$)/h/l(VGO).
Raumgeschwindigkeit (Liquid hourly space velocity LHSV): 1,0 [1/h],
Temperatur: T= 400 °C and 385 °C

Die verschiedenen Einstellungen wurden für jeweils mindestens drei Tage konstant gehalten. Die Temperaturänderungen wurden mit 10 °C/h durchgeführt.

Analytik des Vakuum-Gas-Öls nach katalytischer Behandlung

Die flüchtigen organischen Produkte (C1-C7) und die permanenten Gase (H$_2$, H$_2$S, TCD) wurden mittels Online-Gaschromatographie analysiert. Zur Bestimmung der Schwefel- und Stickstoffgehalte sowie der Dichten wurden Produktproben gezogen und offline analysiert. Die Ergebnisse der katalytischen Tests sind in der Tab. 3 aufgeführt.
Die in Tabelle 3 angegebenen Ergebnisse zeigen, dass die erfinderischen Katalysatoren zu deutlich erniedrigten Schwefelgehalten und Stickstoffgehalten im behandelten Vakuum-Gas-Öl führen. Damit wurde gezeigt, dass die erfindungsgemäßen Katalysatormaterialien und die unter deren Verwendung hergestellten und mit aktivem Metall belegten Träger, somit die erfindungsgemäß hergestellten CoMo- und NiMo-Katalysatoren, eine im Vergleich zum Stand der Technik deutlich verbesserte katalytische Performance bzgl. der HDS- und HDN-Aktivität aufweisen.

Tab. 3: Katalysator-Eigenschaften und katalytische Performance

| Probe | | Metallbeladung | | | Physikalische Eigenschaften der Katalysatoren | | | | Katalytische Performance (Eigenschaften des VGO nach "katalytischer Behandlung") | | | | |
| | | | | | | | | | 390 °C, LHSV 1 h$^{-1}$, 80 bar | | 400 °C, LHSV 1 h$^{-1}$, 120 bar | | |
| Pulver aus Beispiel | Beladung | MoO$_3$ [wt.%] | CoO [wt.%] | NiO [wt.%] | Spez. Oberfläche(5 Pkt-BET) [m$^2$/g] | Porenvolumen (Total) [cm$^3$/g] | Mittlere Porengröße [nm] | TBD [g/l] | S Gehalt im Produkt [mg/kg] | N Gehalt im Produkt [mg/kg] | S Gehalt im Produkt [mg/kg] | N Gehalt im Produkt [mg/kg] | Produkt-Dichte |
|---|---|---|---|---|---|---|---|---|---|---|---|---|---|
| VB1 | CoMo | 24 | 4.3 | - | 55 | 0.14 | 9 | 1060 | 583 | 127 | 76 | 3 | 0,8333 |
| VB2 | CoMo. | 24 | 4.3 | - | 65 | 0,09 | 6 | 1180 | 462 | 109 | 60 | 2 | 0,8313 |
| EB1 | CoMo. | 24 | 4.3 | - | 110 | 0.36 | 13 | 943 | 70 | 27 | 24 | 1 | 0,8257 |
| EB2 | CoMo. | 18 | 3.6 | - | 182 | 0.39 | 9 | 871 | 71 | 23 | 24 | 2 | 0,8238 |
| EB2 | CoMo. | 24 | 4.3 | - | 119 | 0.32 | 11 | 1008 | 85 | 31 | 25 | 1 | 0,8256 |
| EB2 | NiMo. | 27.0 | - | 4.7 | 96 | 0.28 | 12.0 | 1014 | 64 | 11 | 22 | 0 | 0,8217 |
| EB3 | CoMo. | 24 | 4.3 | - | 122 | 0.33 | 11 | 950 | 63 | 23 | 21 | 1 | 0,8239 |

**Patentansprüche**

1. Pulverförmiges Katalysatormaterial auf Titanoxid-Basis, mit einem Gehalt von zusammen mindestens 90 Gew.-% hydratisiertes Titanoxid mit der allgemeinen Formel $TiO_{(2-x)}(OH)_{2x}$ mit $0 < x \leq 1$, besonders $0,1 < x \leq 1$, berechnet als $TiO_2$, und Siliziumdioxid einschließlich hydratisierter Vorformen davon, berechnet als $SiO_2$, welches eine spezifische Oberfläche, bestimmt mittels N Porosimetrie wie in der Beschreibung beschrieben, von $> 300$ m$^2$/g und einen isoelektrischen Punkt, bestimmt wie in der Beschreibung beschrieben, im Bereich 4,5 - 5,9 aufweist, wobei das $TiO_2$/$SiO_2$-Gewichtsverhältnis, jeweils als $TiO_2$ und $SiO_2$ bestimmt, mindestens 3, bevorzugt mindestens 5, und weniger als 30, bevorzugt weniger als 25 beträgt, und sich die Gew.-% auf das Gesamtgewicht des bei 105 °C für mindestens 2 Stunden getrockneten Katalysatormaterials beziehen.

2. Pulverförmiges Katalysatormaterial auf Titanoxid-Basis gemäß Anspruch 1, wobei das Material eine photokatalytische Chloroform-Abbaurate von mehr als 0,3 mmol/(h*m$^2$), bevorzugt mehr als 0,5 mmol/(h*m$^2$) besitzt.

3. Pulverförmiges Katalysatormaterial auf Titanoxid-Basis gemäß Anspruch 1 oder 2 mit einem Gesamtporenvolumen , bestimmt mittels $N_2$-Desorption gemäß der Beschreibung, von mindestens 0,3 cm$^3$/g, bevorzugt mehr als 0,5 cm$^3$/g, besonders bevorzugt mehr als 0,7 cm$^3$/g.

4. Pulverförmiges Katalysatormaterial auf Titanoxid-Basis gemäß einem der Ansprüche 1 bis 3, welches nach thermischer Behandlung von 1 h bei 500 °C unter Normalatmosphäre eine spezifische Oberfläche von mindestens 80 m$^2$/g, besonders von mindestens 100 m$^2$/g, bevorzugt von mindestens 150 m$^2$/g aufweist.

5. Pulverförmiges Katalysatormaterial auf Titanoxid-Basis gemäß einem der Ansprüche 1 bis 4, wobei der isoelektrische Punkt im Bereich von 4,7 bis 5,9 liegt.

6. Pulverförmiges Katalysatormaterial auf Titanoxid-Basis gemäß einem der Ansprüche 1 bis 5, wobei im Röntgendiffraktogramm das Verhältnis der Höhe des intensivsten Reflexes der Anatasstruktur (Reflex (101)) zur Höhe des intensivsten Reflexes der Rutil-Struktur (Reflex (110)) nach Abzug eines linearen Untergrunds mindestens 5:1, bevorzugt mindestens 10:1 beträgt.

7. Verfahren zur Herstellung des pulverförmigen Katalysatormaterials auf Titanoxid-Basis nach einem der Ansprüche 1 bis 6, bei dem:

   a. eine wässrige Suspension von Titanoxidhydrat-Partikeln der allgemeinen Formel $TiO_{(2-x)}(OH)_{2x}$ mit $0 < x \leq 1$, besonders $0,1 < x \leq 1$, bevorzugt mit mittleren Partikelgrößen von 20 - 500 nm unter intensivem Rühren mit einer Si-haltigen Verbindung versetzt wird, wobei der pH-Wert durch die optionale Zugabe eine Säure oder Lauge im Bereich von pH = 3 bis 9, insbesondere 4 bis 7, gehalten werden kann,
   b. optional der pH-Wert, falls erforderlich, auf den Bereich zwischen 4 und 7 nachgestellt wird,
   c. die erhaltene Suspension abfiltriert wird, und
   d. der erhaltene Filterkuchen mit Wasser gewaschen wird, bis das Filtrat eine Leitfähigkeit von höchstens 500 $\mu$S/cm aufweist.

8. Verfahren nach Anspruch 7, bei dem als Si-haltige Verbindung eine $Na_2SiO_3$-Lösung mit einer Si02-Konzentration von 100 - 500 g $SiO_2$/l, bevorzugt 200-400 g $SiO_2$/l, verwendet wird.

9. Verfahren nach Anspruch 7 oder 8, bei dem der pH-Wert der Titanoxid-Suspension vor Zugabe der Si-haltigen Lösung auf pH-Werte von 4,0 bis 8,5, bevorzugt auf 4,0 bis 7,5, besonders bevorzugt auf 4,0 bis 7,0, optional durch Zugabe von Säure oder Lauge eingestellt wird und während der Zugabe der Si-haltigen Lösung bevorzugt bei dem zuvor eingestellten pH-Wert gehalten wird.

10. Verwendung des pulverförmigen Katalysatormaterials nach einem der Ansprüche 1 bis 6 zur Herstellung von Formkörpern, insbesondere zur katalytischen Anwendung oder als Träger für katalytisch aktive Metalle zur Anwendung im Bereich Katalyse wie der Photokatalyse, Claus-Katalyse, Claus-Tail-Gas-Behandlung, SCR, Hydrotreating, Gas-to-Liquid-Verfahren, Fischer-Tropsch-Verfahren.

11. Formkörper auf Titanoxid-Basis mit einem Gehalt an pulverförmigen Katalysatormaterial nach einem der Ansprüche 1 bis 6 mit einer spezifischen Oberfläche, bestimmt mittels $N_2$ Porosimetrie, wie in der Beschreibung beschrieben, von $> 80$ m$^2$/g, besonders $> 100$ m$^2$/g, vorzugsweise $> 120$ m$^2$/g, besonders vorzugsweise $> 150$ m$^2$/g, ganz

besonders vorzugsweise > 200 m$^2$/g.

12. Formkörper nach Anspruch 11 mit einem totalen Porenvolumen , bestimmt mittels N$_2$ Porosimetrie, wie in der Beschreibung erwähnt, von mehr als 0,2 cm$^3$/g, vorzugsweise mehr als 0,3 cm$^3$/g, besonders mehr als 0,5 cm$^3$/g, mehr bevorzugt mehr als 0,55 cm$^3$/g, ganz besonders bevorzugt mehr als 0,6 cm$^3$/g.

13. Formkörper nach Anspruch 11 oder 12 mit einer spezifischen Gesamtoberfläche pro Volumen von mehr als 100 000 m$^2$/l, bevorzugt mehr als 120 000 m$^2$/l.

14. Verwendung der Titanoxid-haltigen Formkörper nach einem der Ansprüche 11 bis 13 als Katalysator oder als Träger für katalytisch aktive Metalle zur Anwendung im Bereich der Katalyse wie der Photokatalyse, Claus-Katalyse, Claus-Tail-Gas-Behandlung, SCR, Hydrotreating, Gas-to-Liquid-Verfahren, Fischer-Tropsch-Verfahren.

15. Titanoxid-haltige Formkörper nach einem der Ansprüche 11 bis 13, die einen Gehalt an 10 - 35 Gew.% Mo, 0 bis 6 Gew.% Co und/oder Ni, berechnet als Metalloxid MoO$_3$, CoO und NiO, und einen Gehalt an Titanoxid der allgemeinen Formel TiO$_{(2-x)}$(OH)$_{2x}$ mit 0 < x ≤ 1, besonders 0,1 < x ≤ 1 und SiO$_2$, auf 100 Gew.-% aufweisen und die eine spezifische Oberfläche von mindestens 80m$^2$/g, besonders mindestens 100 m$^2$/g und ein Porenvolumen von mehr als 0,25 cm$^3$/g bevorzugt mehr als 0,27 cm$^3$/g haben, wobei sich die Gew.-% auf das Gesamtgewicht der beladenen Titanoxid-haltigen Formkörper beziehen.

16. Titanoxid-haltige Formkörper nach Anspruch 15 wobei der MoO$_3$-Gehalt 18-30 Gew.% beträgt.

17. Titanoxid-haltige Formkörper nach Anspruch 15 oder 16, wobei die mittlere Porengröße, bestimmt wie in der Beschreibung beschrieben, bei 7 - 15 nm liegt.

## Claims

1. Powdered catalyst material on titanium oxide basis, having a combined content of at least 90% by weight hydrated titanium oxide having the general formula TiO$_{(2-x)}$(OH)$_{2x}$ with 0 < x ≤ 1, particularly 0.1 < x ≤ 1, calculated as TiO$_2$, and silicon dioxide including hydrated precursors thereof, calculated as SiO$_2$, which has a specific surface area of > 300 m$^2$/g, determined using N$_2$ porosimetry as described in the description, and an isoelectric point in the range from 4.5 - 5.9, determined as described in the description, wherein the TiO$_2$/SiO$_2$ weight ratio, determined respectively for TiO$_2$ and SiO$_2$ is at least 3, preferably at least 5, and less than 30, preferably less than 25, and the percentages by weight are relative to the total weight of the catalyst material after it has been dried at 105 °C for at least 2 hours.

2. Powdered catalyst material on titanium oxide basis according to claim 1, wherein the material has a photocatalytic chloroform decomposition rate of more than 0.3 mmol/(h*m$^2$), preferably more than 0.5 mmol/(h*m$^2$).

3. Powdered catalyst material on titanium oxide basis according to claim 1 or 2 having a total pore volume, determined using N$_2$-desportion according to the description, of at least 0.3 cm$^3$/g, preferably more than 0.5 cm$^3$/g, particularly preferably more than 0.7 cm$^3$/g.

4. Powdered catalyst material on titanium oxide basis according to any one of claims 1 to 3, which has a specific surface area of at least 80 m$^2$/g, particularly at least 100 m$^2$/g, preferably at least 150 m$^2$/g after thermal treatment for 1 h at 500 °C under normal atmosphere.

5. Powdered catalyst material on titanium oxide basis according to any one of claims 1 to 4, wherein the isoelectric point is in the range from 4.7 to 5.9.

6. Powdered catalyst material on titanium oxide basis according to any one of claims 1 to 5, wherein, in an X-ray diffractogram, the ratio of the height of the most intensive reflex of the anatase structure (reflex (101)) to the height of the most intensive reflex of the rutile structure (Reflex (110)) is at least 5:1, preferably at least 10:1 after deduction of a linear subsurface.

7. Process for preparing the powdered catalyst material on titanium oxide basis according to any one of claims 1 to 6, in which:

a. An aqueous suspension of titanium oxide hydrate particles having the general formula $TiO_{(2-x)}(OH)_{2x}$ with 0 < x ≤ 1, particularly 0.1 < x ≤ 1, preferably with average particle sizes from 20 - 500 nm is reacted with an Si-containing compound while stirring vigorously, wherein the pH value can be maintained in the range from pH = 3 to 9, particularly 4 to 7 by the optional addition of an acid or a base,

b. the pH value is optionally re-adjusted if necessary to the range between 4 and 7,

c. The suspension obtained is filtered off, and

d. The filter cake obtained is washed with water until the filtrate has a conductivity not more than 500 $\mu$S/cm.

8. Process according to claim 7, in which a $Na_2SiO_3$ solution with a $SiO_2$ concentration of 100 - 500 g $SiO_2$/l, preferably 200 - 400 g $SiO_2$/l, is used as the Si-containing compound.

9. Process according to claim 7 or 8, in which the pH value of the titanium oxide suspension is adjusted to pH values from 4.0 to 8.5, preferably 4.0 to 7.5, particularly preferably 4.0 to 7.0, by the optional addition of an acid or a base before the addition of the Si containing solution, and is preferably maintained at the previously set pH value during the addition of the Si containing solution.

10. Use of the powdered catalyst material according to any one of claims 1 to 6 for preparing shaped bodies, particularly for catalytic application or as a support for catalytically active metals for application in the field of catalysis such as photocatalysis, Claus catalysis, Claus-Tail-Gas-treatment, SCR, Hydrotreating, Gas-to-Liquid-Process, Fischer-Tropsch-Process.

11. Shaped bodies on a titanium oxide basis with content of powdered catalyst material according to any one of claims 1 to 6 with a specific surface area of > 80 $m^2$/g, particularly > 100 $m^2$/g, preferably > 120 $m^2$/g, particularly preferably > 150 $m^2$/g, most particularly preferably > 200 $m^2$/g, determined using $N_2$-porosimetry as described in the description.

12. Shaped bodies according to claim 11 with a total pore volume of more than 0.2 $cm^3$/g, preferably more than 0.3 $cm^3$/g, particularly more than 0.5 $cm^3$/g, more preferably more than 0.55 $cm^3$/g, most particularly preferably more than 0.6 $cm^3$/g, determined using $N_2$-porosimetry as mentioned in the description.

13. Shaped bodies according to claim 11 or 12 with a specific total surface area per volume of more than 100 000 $m^2$/l, preferably more than 120 000 $m^2$/l.

14. Use of the titanium oxide-containing shaped bodies according to any one of claims 11 to 13 as a catalyst or support for catalytically active metals for application in the field of catalysis such as photocatalysis, Claus catalysis, Claus-Tail-Gas-treatment, SCR, Hydrotreating, Gas-to-Liquid-Process, Fischer-Tropsch-Process.

15. Titanium oxide-containing shaped bodies according to any one of claims 11 to 13, having a content of 10 - 35 % by weight Mo, 0 to 6 % by weight Co and/or Ni, calculated as metal oxide $MoO_3$, CoO and NiO, and a content of titanium oxide with the general formula $TiO_{(2-x)}(OH)_{2x}$ wherein 0 < x ≤ 1, particularly 0.1 < x ≤ 1 and $SiO_2$, per 100 % by weight and which have a specific surface area of at least 80 $m^2$/g, particularly at least 100 $m^2$/g and a pore volume of more than 0.25 $cm^3$/g preferably more than 0.27 $cm^3$/g, wherein the percentages by weight are relative to the total weight of the charged titanium oxide-containing shaped bodies.

16. Titanium oxide-containing shaped bodies according to claim 15 wherein the $MoO_3$ content is 18 - 30 % by weight.

17. Titanium oxide-containing shaped bodies according to claim 15 or 16, wherein the average pore size, determined as described in the description, is 7 - 15 nm.

**Revendications**

1. Matériau de catalyseur pulvérulent à base d'oxyde de titane, lequel a une teneur globale d'au moins 90 % en poids d'oxyde de titane sous forme d'hydrate répondant à la formule générale $TiO_{(2-x)}(OH)_{2x}$ avec 0 < x ≤ 1, notamment 0,1 < x ≤ 1, calculé sous forme de $TiO_2$, et de dioxyde de silicium y compris les précurseurs sous forme d'hydrates de celui-ci, calculé sous forme de $SiO_2$, et lequel présente une surface spécifique, déterminé par porosimétrie au $N_2$ selon les indications dans la description, > 300 $m^2$/g et un point isoélectrique, déterminé selon les indications dans le description, compris entre 4,5 et 5,9, le rapport de poids entre $TiO_2/SiO_2$, déterminé sous forme de $TiO_2$ respectivement de $SiO_2$, étant supérieur ou égal à 3, de préférence supérieur ou égal à 5, et inférieur à 30, de préférence inférieur à 25, et les % en poids étant exprimés par rapport au poids total dudit matériau de catalyseur après que celui-ci a été séché pendant au moins 2 heures à 105 °C.

2. Matériau de catalyseur pulvérulent à base d'oxyde de titane selon la revendication 1, ledit matériau ayant un taux de dégradation photocatalytique du chloroforme supérieur à 0,3 mmol/(h*m$^2$), de préférence supérieur à 0,5 mmol/(h*m$^2$).

3. Matériau de catalyseur pulvérulent à base d'oxyde de titane selon les revendications 1 ou 2 ayant un volume poreux total, déterminé par désorption de N$_2$ selon la description, supérieur ou égal à 0,3 cm$^3$/g, de préférence supérieur à 0,5 cm$^3$/g, avec une préférence particulière supérieur à 0,7 cm$^3$/g.

4. Matériau de catalyseur pulvérulent à base d'oxyde de titane selon l'une des revendications 1 à 3, lequel présente, suite à un traitement thermique pendant 1 h à 500 °C sous atmosphère normale, une surface spécifique supérieure ou égale à 80 m$^2$/g, notamment supérieure ou égale à 100 m$^2$/g, de préférence supérieure ou égale à 150 m$^2$/g.

5. Matériau de catalyseur pulvérulent à base d'oxyde de titane selon l'une des revendications 1 à 4, le point isoélectrique étant compris entre 4,7 et 5,9.

6. Matériau de catalyseur pulvérulent à base d'oxyde de titane selon l'une des revendications 1 à 5, le diffractogramme de rayons X montrant un rapport entre la hauteur du signal le plus intense de la structure d'anatase (signal (101)) et la hauteur du signal le plus intense de la structure de rutile (signal (110)) qui est, suite à la déduction du signal de fond linéaire, supérieur ou égal à 5:1, de préférence supérieur ou égal à 10:1.

7. Procédé de fabrication du matériau de catalyseur pulvérulent à base d'oxyde de titane selon l'une des revendications 1 à 6, consistant à :

   a. ajouter, sous agitation vigoureuse, un composé contenant du Si à une suspension aqueuse de particules d'hydrate d'oxyde de titane répondant à la formule générale TiO$_{(2-x)}$(OH)$_{2x}$, avec 0 < x ≤ 1, de préférence 0,1 < x ≤ 1, leur taille de particules moyenne étant préférentiellement comprise entre 20 et 500 nm, le pH pouvant être maintenu entre pH = 3 à 9, notamment 4 à 7, par addition optionnelle d'un acide ou d'une solution alcaline,
   b. réajuster, optionnellement si nécessaire, le pH de manière à ce qu'il soit compris entre 4 et 7,
   c. soumettre la suspension ainsi obtenue à une filtration, et
   d. laver à l'eau le gâteau de filtration ainsi obtenu, jusqu'à ce que le filtrat présente une conductivité inférieure ou égale à 500 μS/cm.

8. Procédé selon la revendication 7, dans lequel on met en œuvre, en tant que composé contenant du Si, une solution de Na$_2$SiO$_3$ ayant une concentration de 100 à 500 g SiO$_2$/L, préférentiellement de 200 à 400 g SiO$_2$/L.

9. Procédé selon les revendications 7 ou 8, dans lequel on ajuste optionnellement le pH de la suspension d'oxyde de titane, avant d'y ajouter la solution contenant du Si, à des valeurs de pH comprises entre 4,0 et 8,5, de préférence entre 4,0 et 7,5, avec une préférence particulière entre 4,0 et 7,0, par addition d'un acide ou d'une solution alcaline, et l'on maintient préférentiellement le pH, pendant l'ajout de la solution contenant di Si, à sa valeur telle qu'ajustée auparavant.

10. Utilisation du matériau de catalyseur pulvérulent selon l'une des revendications 1 à 6 pour fabriquer des corps moulés, destinés notamment à une application catalytique ou servant de support pour des métaux à activité catalytique destinés à une application dans le domaine des catalyses telles que la photocatalyse, la catalyse de Claus, le traitement des gaz résiduels du procédé Claus, la RCS, l'hydrotraitement, les procédés de production de liquides à partir de gaz, le procédé Fischer-Tropsch.

11. Corps moulés à base d'oxyde de titane contenant du matériau de catalyseur pulvérulent selon l'une des revendications 1 à 6 ayant une surface spécifique, déterminée par porosimétrie au N$_2$ selon les indications dans la description, de > 80 m$^2$/g, notamment > 100 m$^2$/g, préférentiellement > 120 m$^2$/g, avec une préférence particulière > 150 m$^2$/g, avec une préférence toute particulière > 200 m$^2$/g.

12. Corps moulés selon la revendication 11 ayant un volume poreux total, déterminé par porosimétrie au N$_2$ comme il est mentionné dans la description, supérieur à 0,2 cm$^3$/g, de préférence supérieur à 0,3 cm$^3$/g, plus particulièrement supérieur à 0,5 cm$^3$/g, de manière plus préférée supérieur à 0,55 cm$^3$/g, avec une préférence toute particulière supérieur à 0,6 cm$^3$/g.

13. Corps moulés selon les revendications 11 ou 12, ayant une surface spécifique totale, par rapport au volume, supérieure à 100 000 m$^2$/L, de préférence supérieure à 120 000 m$^2$/L.

14. Utilisation des corps moulés contenant de l'oxyde de titane selon l'une des revendications 11 à 13 en tant que support pour des métaux à activité catalytique destinés à une application dans le domaine des catalyses telles que la photocatalyse, la catalyse de Claus, le traitement des gaz résiduels du procédé Claus, la RCS, l'hydrotraitement, les procédés de production de liquides à partir de gaz, le procédé Fischer-Tropsch.

15. Corps moulés selon l'une des revendications 11 à 13, lesquels comportent une teneur de 10 à 35 % en poids de Mo, de 0 à 6 % en poids de Co et/ou de Ni, calculée sous forme des oxydes de métaux, $MoO_3$, $CoO$ et $NiO$, et une teneur en oxyde de titane répondant à la formule générale $TiO_{(2-x)}(OH)_{2x}$, avec $0 < x \leq 1$, notamment $0,1 < x \leq 1$, et en $SiO_2$ de manière à atteindre 100 % en poids, et lesquels ont une surface spécifique supérieure ou égale à 80 m$^2$/g, notamment supérieure ou égale à 100 m$^2$/g, et un volume poreux supérieur à 0,25 cm$^3$/g, de préférence supérieur à 0,27 cm$^3$/g, les % en poids étant exprimés par rapport au poids total des corps moulés contenant de l'oxyde de titane à l'état chargé.

16. Corps moulés contenant de l'oxyde de titane selon la revendication 15, la teneur en $MoO_3$ étant comprise entre 18 et 30 % en poids.

17. Corps moulés contenant de l'oxyde de titane selon les revendications 15 ou 16, la taille des pores moyenne, déterminée selon les indications dans la description, étant comprise entre 7 et 15 nm.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6419889 B1
- EP 668100 A1
- DE 3619337 A1
- EP 1719737 A1
- US 6956006 B
- WO 0114054 A1
- US 7125536 B2
- US 8545796 B2
- DE 102011051334 A